# EUROPEAN PATENT APPLICATION

(11) **EP 2 485 157 A2**
(43) Date of publication of application: **08.08.2012**
(21) Application number: 10820783.8
(22) Date of filing: 06.09.2010
(51) Int. Cl.: G06F 17/00, G06F 17/30, G06T 17/00

(54) **METHOD, TERMINAL AND COMPUTER-READABLE RECORDING MEDIUM FOR PERFORMING VISUAL SEARCH BASED ON MOVEMENT OR POSITION OF TERMINAL**

(30) Priority: 01.10.2009 KR 20090093839
(71) Applicant: Olaworks, Inc., Seoul 135-919 (KR)
(72) Inventor: LEE, Kyoung Suk, Seoul 138-160 (KR); CHOI, Young Il, Seoul 120-122 (KR); JU, Chan Jin, Seoul 151-015 (KR); RYU, Jung Hee, Seoul 134-772 (KR)
(74) Representative: Metzler, Volker
(86) International application number: PCT/KR2010/006052
(87) International publication number: WO 2011/040710

(57) **Abstract**

The present invention includes a method for performing visual search based on a movement and/or an angular position of a terminal. The method includes the steps of: (a) sensing a movement and/or an angular position of a terminal by using at least one of sensors; (b) determining whether a triggering event occurs or not by referring to at least one of the sensed movement and the sensed angular position of the terminal; and (c) if the triggering event occurs, allowing visual search to be performed for at least one of objects included in an output image displayed on the terminal at the time of the occurrence of the triggering event; wherein the output image is generated in a form of augmented reality by combining an image inputted through the terminal in real time with information relevant thereto.

## Description

The present invention relates a method, a terminal and a computer-readable recording medium for providing visual search depending on a movement and/or angular position of the terminal; and more particularly, to the method, the terminal and the computer-readable recording medium for the visual search for an object(s) appearing in an image of augmented reality displayed on the terminal if the terminal manipulated by a user moves or has an angular position according to a prefixed pattern.

Recently thanks to the drastic development of telecommunication technologies, most people use mobile terminals such as mobile phones, PDAs, mobile televisions, etc. and the dependence on such mobile terminals is on increase.

Accordingly, the needs and desires of modern people who intend to obtain various kinds of information through such mobile terminals are increasing every day and content providers intend to enhance content usage by providing users with information on various forms of contents and then triggering their interest.

However, conventional mobile phones almost disable users to join social activities with specific or unspecific other users except phone calling or SMS messaging and they are almost impossible to create a community for sharing certain information or exchanging opinions.

Recently, technologies for providing various functions including data retrieval, videotelephony, etc. by using mobile terminals have been developed, but relatively complicated operations of the mobile terminal are required to perform such functions.

To improve such a problem, technologies capable of controlling images by movements or angular positions of mobile terminals recently have been developed.

However, technologies only for controlling a move of a cursor or a specific object displayed on a screen of a terminal according to movements or angular positions of the mobile terminals have been developed but methods for providing various information or user interfaces based on the above-mentioned technologies have not been developed.

Accordingly, the applicant of the present invention came to develop a technology for providing a user with, and sharing, various types of information and at the same time offering a new user interface which allows the user to intuitively control a diversity of operations of the terminal by allowing the user to perform visual search for a specific object(s) appearing in an image displayed on the terminal (e.g., an image displayed in a form of augmented reality) by controlling a movement and/or an angular position of the terminal.

It is an object of the present invention to solve all the problems mentioned above.

It is another object of the present invention to (i) determine whether a triggering event for visual search occurs or not by referring to a movement and/or an angular position of a terminal; and (ii) perform the visual search for at least one of objects appearing in an image displayed through a screen of the terminal at the time when the event triggering occurs; thereby finally allowing a user to get various types of information on the object (s) appearing in the image displayed through the screen of the terminal only by applying an intuitive and simple operation(s) to the terminal.

It is still another object of the present invention to perform the visual search for at least one of objects appearing in the image displayed in a form of augmented reality through the screen of the terminal at the time when the event triggering occurs and then acquire information on the objects appearing in the image and share such information with many other users.

In accordance with one aspect of the present invention, there is provided a method for performing visual search based on a movement and/or an angular position of a terminal including the steps of: (a) sensing a movement and/or an angular position of a terminal by using at least one of sensors; (b) determining whether a triggering event occurs or not by referring to at least one of the sensed movement and the sensed angular position of the terminal; and (c) if the triggering event occurs, allowing visual search to be performed for at least one of objects included in an output image displayed on the terminal at the time of the occurrence of the triggering event; wherein the output image is generated in a form of augmented reality by combining an image inputted through the terminal in real time with information relevant thereto.

In accordance with another aspect of the present invention, there is provided a terminal for performing visual search based on a movement and/or angular position thereof including: a movement and/or angular position sensing part 110 for sensing information on a movement and/or angular position thereof by using at least one of sensors; a triggering event identifying part for determining whether a triggering event occurs or not by referring to at least one of the sensed movement and the sensed angular position thereof; and a visual search part for performing visual search for at least one of objects included in an output image displayed thereon if the triggering event occurs; wherein the output image is generated in a form of augmented reality by combining an image inputted therethrough in real time with information relevant thereto.

The above and other objects and features of the present invention will become apparent from the following description of preferred embodiments given in conjunction with the accompanying drawings, in which:
Fig. 1 is a drawing illustrating a configuration of a terminal in accordance with one example embodiment of the present invention.
Fig. 2 exemplarily shows a configuration of a movement and/or angular position sensing part 110 in accordance with one example embodiment of the present invention.
Fig. 3 is a drawing exemplarily representing a configuration of a control par 130 in accordance with one example embodiment of the present invention.
Fig. 4 exemplarily shows an image displayed through the terminal 100 in accordance with one example embodiment of the present invention.

The detailed description of the present invention illustrates specific embodiments in which the present invention can be performed with reference to the attached drawings.

In the following detailed description, reference is made to the accompanying drawings that show, by way of illustration, specified embodiments in which the present invention may be practiced. These embodiments are described in sufficient detail to enable those skilled in the art to practice the present invention. It is to be understood that the various embodiments of the present invention, although different from one another, are not necessarily mutually exclusive. For example, a particular feature, structure, or characteristic described herein in connection with one embodiment may be implemented within other embodiments without departing from the spirit and scope of the present invention. In addition, it is to be understood that the location or arrangement of individual elements within each disclosed embodiment may be modified without departing from the spirit and scope of the present invention. The following detailed description is, therefore, not to be taken in a limiting sense, and the scope of the present invention is defined only by the appended claims, appropriately interpreted, along with the full range of equivalents to which the claims are entitled.

For reference, changes in "an angle of a terminal" in the present invention may be a concept including not only changes in angular positions thereof around an axis but also those around unfixed axis.

### Configuration of Terminal

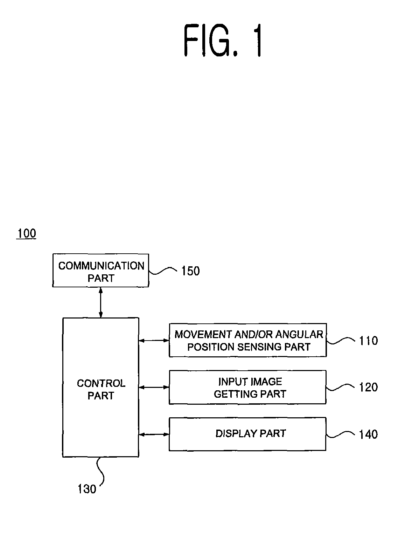

Fig. 1 illustrates a configuration of a terminal in accordance with one example embodiment of the present invention.

As illustrated in Fig. 1, the terminal 100 in the present invention may include a movement and/or angular position sensing part 110 for sensing information on a movement of the terminal 100, such as its distance, its velocity, its acceleration, its direction, etc., and/or information on an angular position of the terminal 100 such as an angle at which the terminal 100 is tilted to an axis of rotation; an input image getting part 120 for acquiring an image which is a subject of visual search; a control part 130 for performing (or instructing to perform) visual search for an object (s) included in the acquired inputted image, if a triggering event occurs based on the information on the movement and/or the angular position sensed by the movement and/or angular position sensing part 110; a display part 140 for displaying the information acquired by the control part 130 on the terminal; and a communication part 150.

In accordance with one example embodiment of the present invention, the movement and/or angular position sensing part 110, the input image getting part 120, the control part 130, the display part 140 and the communication part 150 may be program modules in the terminal 100. Such program modules may be included in the terminal 100 in a form of an operating system, an application program module and other program modules, or they may be physically stored in various storage devices well known to those skilled in the art or in a remote storage device capable of communicating with the terminal 100. The program modules may include but not be subject to a routine, a subroutine, a program, an object, a component, and a data structure for executing an operation or a type of abstract data that will be described in accordance with the present invention.

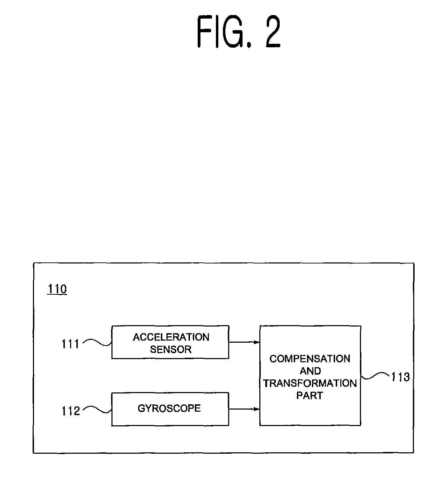

By referring to Fig. 2, the configuration and functions of the movement and/or angular position sensing part 110 in accordance with one example embodiment of the present invention are described in detail below.

As shown in Fig. 2, the movement and/or angular position sensing part 110 may include one or more acceleration sensors 111, one or more gyroscopes 112 and a compensation and transformation part 113.

The movement and/or angular position sensing part 110 may perform a function of getting information on linear movement, rotation movement, shaking, etc. of the terminal 100 based on acceleration measured by using a variety of sensors therein. The acceleration sensor(s) 111 is a sensor which senses a change in a movement of the terminal 100 to measure the acceleration, and detects information on distance, velocity, acceleration, and direction of the movement of the terminal 100. Furthermore, the gyroscope(s) 112 may perform a function of sensing rotation of the terminal 100 and measuring a degree of the movement. The acceleration sensor (s) 111 may express the values of sensed acceleration as a vector in three axes (the X, Y and Z axes) and the gyroscope (s) 112 may express the values of sensed rotation as another vector in three axes (i.e., roll, pitch and yaw). Embedded with the acceleration sensor (s) 111 and the gyroscope(s) 112, the movement and/or angular position sensing part 110 may calculate velocity and position of the terminal and changes in the velocity and the position. The movement and/or angular position sensing part 110 may be a normal inertial navigation system (INS) and the gyroscope (s) 112 may include optic gyroscope (s), mechanical one(s), piezoelectric one(s), etc..

The compensation and transformation part 113 may perform a function of converting analog signal outputted from the acceleration sensor(s) 111 and the gyroscope(s) 112 to analog and/or digital signal. Moreover, it may conduct a function of converting to information on movements, angles, and shaking by integrating the converted signal and tracing its path.

The movement and/or angular position sensing part 110 is mentioned as an example but it is not limited only to this and the information on the movement and/or the angular position of the terminal 100 may be obtained by using another sensor within the scope of the achievable objects of the present invention.

The information on the movements and/or the angular positions of the terminal 100 outputted from the movement and/or angular position sensing part 110 may be updated for a certain period of time or in real time and be transferred to the control part 130.

In accordance with one example embodiment of the present invention, the input image getting part 120 may perform a function of acquiring information on an image to be provided to a screen of the terminal 100 through the display part 140 to be explained below. In accordance with one example embodiment of the present invention, the input image getting part 120 may include an optical device such as a CCD camera and may receive a landscape around the user who holds the terminal 100 in a preview mode in real time to display it through the screen of the terminal 100. At the time, the landscape shot in real time may be provided with supplementary information relevant thereto to thereby be displayed through the screen of the terminal 100 in a form of augmented reality. Using augmented reality, information on objects which are subjects of visual search will be able to be added as a tag(s) and therefore, this will be able to have explosive power enough to provide a tremendous amount of useful information for a great many users.

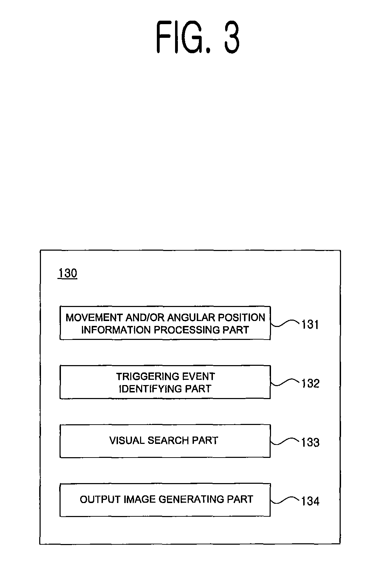

By referring to Fig. 3, the control part 130 for detecting occurrence of a triggering event by analyzing information on a movement or a angular position received from the movement and/or angular position sensing part 110 and performing visual search thereby to create an output image will be explained below.

As depicted in Fig. 3, the control part 130 may include a movement and/or angular position information processing part 131, a triggering event identifying part 132, a visual search part 133, and an output image generating part 134.

First, the movement and/or angular position information processing part 131 in accordance with one example embodiment of the present invention may perform a function of processing information on the movement and/or the angular position of the terminal 100 acquired by the movement and/or angular position sensing part 110.

Particularly, the movement and/or angular position information processing part 131 in accordance with one example embodiment of the present invention may conduct a function of identifying the user's gesture based on the information on the movement (e.g., distance, velocity, acceleration, direction, etc.), and the information on the angular position (e.g., an angle tilted to an axis of rotation, etc.), sensed by the acceleration sensor (s) 111 and the gyroscope (s) 112 in the movement and/or angular position sensing part 110. In short, as described below, the user may input a command of controlling an operation of the terminal 100 (e.g., visual search, etc.) by shaking, rotating, or stopping moving for a certain period of time, the terminal 100. To do this, the movement and/or angular position information processing part 131 may process information on the movement of the terminal 100, including distance, velocity, acceleration, direction, etc. and/or the information on the angular position of the terminal 100 including the angle tilted to the axis of rotation, etc.

In accordance with one example embodiment of the present invention, the triggering event identifying part 132 may carry out a function of analyzing a pattern(s) of the movement and/or the angular position of the terminal 100 processed by the movement and/or angular position information processing part 131 and determining whether the movement and/or the angular position of the terminal 100 falls under a triggering event for triggering a particular operation of the terminal 100 or not. More specifically, the triggering event identifying part 132 may perform a function of determining whether a specific movement or/and a specific angular position of the terminal 100 corresponds to a triggering event for performing visual search for an object(s) included in the image displayed through the terminal 100 by referring to at least either of information on the movement of the terminal 100 including distance, velocity, acceleration, direction, etc. and/or the information on the angular position of the terminal 100 including the tilted angle to the axis of rotation, etc..

In accordance with one example embodiment of the present invention, the triggering event, herein, may be an event intuitively showing the intention of the user who wants to perform visual search and may be predetermined as various kinds of movements or angular positions of the terminal 100 including shaking, rotation, non-movement (a state of stopping moving for a certain period of time), inclination, etc.. Examples of the triggering event may include a case in which the terminal 100 is rotated in center of at least one of axes of rotation (i.e. roll, pitch and yaw) at an angle or a velocity exceeding a preset angle or a prescribed velocity, a case in which the terminal 100 is moved along at least one of the axes of rotation at a distance or a velocity exceeding a predesigned distance or a prescribed velocity, a case in which the terminal 100 is not moved or rotated for a certain period of time, a case in which the terminal 100 is tilted within a preformatted scope of angles to at least one of the axes of rotation and the like.

Furthermore, the triggering event in accordance with one example embodiment of the present invention may be predetermined to be a selection of a certain input key while the terminal 100 is taking a specific movement or a specific angular position. For example, an event of the fixed input key being pressed while the terminal 100 corresponds to a horizontal view mode may be prescribed as a triggering event that triggers an operation for searching information adjacent to a geographic point where the terminal is located and another event of the fixed input key being pressed while the terminal 100 corresponds to a vertical view mode may be prescribed as a triggering event that triggers an operation for searching information on an object(s) appearing in an image taken by the terminal.

However, the triggering events in accordance with the present invention are not limited to those listed above and will be appropriately changed within the scope of the achievable objects of the present invention.

Moreover, in accordance with one example embodiment of the present invention, the visual search part 133 may carry out a function of performing visual search for an object(s) included in the image displayed on the display part 140 of the terminal 100 at the time of the occurrence of the triggering event, if any. As explained above, the visual search part 133 in accordance with one example embodiment of the present invention may be embedded in a server (not illustrated) which may remotely communicate with the terminal to perform a function of requiring a lot of operations, including image matching operations accompanied by visual search, retrieval operations, etc., smoothly.

Besides, the visual search part 133 in accordance with one example embodiment of the present invention may perform visual search for top n objects located closer to the center of the image among multiple objects included in the image at the time of occurrence of the triggering event and therefore may provide a result of visual search which meets the intention of the user more precisely.

As mentioned above, an object recognition technology is required to recognize a specific object (s) included in the inputted image at a random distance with a random angle. As such an object recognition technology in accordance with an example embodiment of the present invention, an article titled "A Comparison of Affine Region Detectors" authored jointly by K. MIKOLAJCZYK and seven others and published in "International Journal of Computer Vision" in November 2005 and the like may be referred to (The whole content of the article may be considered to have been combined herein). To recognize the same object shot at different angles more precisely, the aforementioned article describes how to detect an affine invariant region. Of course, the object recognition technology applicable to the present invention is not limited only to the method described in the article and it will be able to reproduce the present invention by applying various examples.

In accordance with one example embodiment of the present invention, the output image generating part 134 may perform a function of creating an output image in a form of augmented reality by combining an input image as a subject of visual search with various pieces of information relating thereto. More specifically, to configure the output image in a form of augmented reality, the output image generating part 134 in accordance with one example embodiment of the present invention may display information on a specific object(s) in a form of visual "tag(s)" giving a hint that the information on the specific object(s) is associated with the specific object(s). In addition, information on the specific object (s) obtained as a result of the visual search may be attached in a form of a new tag(s) with respect to the specific object(s) in augmented reality and the newly attached tag(s) will be able to be also offered to other users.

In accordance with one example embodiment of the present invention, the output image generating part 134, besides, may additionally conduct a function of controlling displaying methods and/or types of information included in the output image displayed on the terminal 100 by sensing a certain shaking or a certain angular position of the terminal 100 as a triggering event.

For example, an image including the landscape shot in real time overlaid with supplementary information in a form of augmented reality may be displayed on the terminal 100 basically. If a gesture of shaking is performed once as a first triggering event, multiple thumbnails relevant to the supplementary information will be able to be sorted and displayed in the order closer to the current location of the terminal 100; if the shaking gesture is performed twice as a second triggering event, multiple thumbnails will be able to be sorted and displayed in the order of popularity; and if the shaking gesture is conducted three times as a third triggering event, it will be possible that multiple thumbnail events disappear and the image in a form of augmented reality is returned again by overlaying the landscape shot in real time and the relevant supplementary information.

As another example, if the image including the landscape shot in real time overlaid with the supplementary information in a form of augmented reality is displayed on the terminal 100, a gesture of shaking as a triggering event will be inputted to allow a mode of displaying all pieces of relevant supplementary information and a mode of displaying only information arbitrarily generated by the user among all the pieces of relevant supplementary information (i.e., icons, posts, comments, etc.) to be mutually convertible.

However, the example embodiments under which a method of controlling a type of display or a type of information by a triggering event is not limited only to those listed above and it will be able to reproduce the present invention by applying various examples besides.

In accordance with one example embodiment of the present invention, the display part 140 may execute a function of visually displaying the input image acquired by the input image getting part 120 and the output image generated by the output image generating part 134. For example, the display part 140 may be commonly a liquid crystal display (LCD), an organic light emitting diode (OLED) or other flat panel display.

In accordance with one example embodiment of the present invention, the communication part 150 may conduct a function of receiving and transmitting different types of information and content from a server (not illustrated). Namely, the communication part 150 may perform a function of receiving and transmitting data from or/and to the terminal 100 as a whole.

Below is an explanation of the operations of the terminal 100 in accordance with one example embodiment of the present invention by referring to detailed example embodiments.

### Detailed Example Embodiments

As described above, the terminal 100 in accordance with one example embodiment of the present invention may determine whether a triggering event for visual search occurs or not by referring to its movement and/or its angular position and, if such an triggering event occurs, allow visual search to be performed for at least one of objects included in an input image displayed on the terminal 100 at the time of the occurrence of the triggering event.

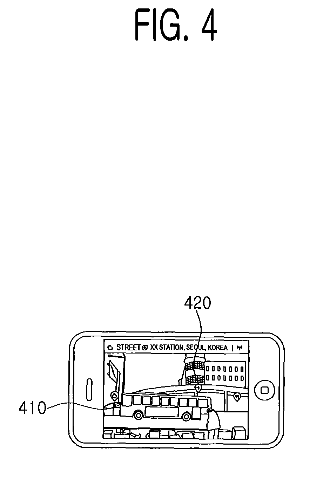

Fig. 4 is a drawing exemplarily representing an output image displayed on the terminal 100 in accordance with one example embodiment of the present invention.

By referring to Fig. 4, the input image acquired by the input image getting part 120 such as a camera embedded in the terminal 100, etc. may be displayed as a preview on the display part 140 of the terminal 100. Herein, the input image may be associated with a street view of a place where the user of the terminal 100 is located, the street view being inputted through a lens of the terminal 100 if the terminal 100 is set to be a preview mode. Fig. 4 exemplarily depicts the state of the output image displayed on the display part 140 of the terminal 100 by combining the input image with the supplementary information relating thereto (e.g., possible to be displayed in a form of icon). At the state, if a triggering event, including shaking, rotation, inclination, non-movement, etc., which commands the performance of visual search occurs, the terminal 100 in accordance with one example embodiment of the present invention may perform visual search for a bus 410 (or a building behind, etc.) near the center of the input image.

By referring to Fig. 4, as the combination of input image and detailed information acquired as a result of the visual search about the bus 410 (or a building behind, etc.) is displayed on the display part 140 of the terminal 100, augmented reality full of new pieces of information will be able to be implemented. Updated information in the augmented reality will be possibly provided for, and shared with, other users. In brief, the output image displayed on the display part 140 of the terminal 100 may be formed in a form of augmented reality by the combination of the input image and the detailed information on the specific object(s) appearing therein, and more specifically, the detailed information on the bus 410 or the building behind may be expressed as a visual tag(s) on the corresponding location.

Hereupon, the terminal 100 in accordance with one example embodiment of the present invention may immediately and intuitively satisfy the desire of the user who wants to get more detailed information on the object(s) being displayed thereon in real time through the augmented reality full of information updated rapidly by a number of users.

In accordance with the present invention, a user may get various types of information on an object(s) appearing in an image displayed on a terminal only by performing an intuitive and simple manipulation (s), e.g., moving the terminal along a prefixed pattern, controlling the terminal with a prefixed angular position, and therefore, visual search for information on the objects in real time will increase user convenience and intrigue the user.

In accordance with the present invention, visual search may be performed for at least one of objects appearing in an image displayed in a form of augmented reality on the screen of the terminal at the time of the occurrence of a triggering event and information on the objects may be added as a tag(s) in a form of the augmented reality. This may bring an effect of sharing such information with many other users.

The embodiments of the present invention can be implemented in a form of executable program command through a variety of computer means recordable to computer readable media. The computer readable media may include solely or in combination, program commands, data files and data structures. The program commands recorded to the media may be components specially designed for the present invention or may be usable to a skilled person in a field of computer software. Computer readable record media include magnetic media such as hard disk, floppy disk, magnetic tape, optical media such as CD-ROM and DVD, magneto-optical media such as floptical disk and hardware devices such as ROM, RAM and flash memory specially designed to store and carry out programs. Program commands include not only a machine language code made by a complier but also a high level code that can be used by an interpreter etc., which is executed by a computer. The aforementioned hardware device can work as more than a software module to perform the action of the present invention and they can do the same in the opposite case.

While the invention has been shown and described with respect to the preferred embodiments, it will be understood by those skilled in the art that various changes and modification may be made without departing from the spirit and scope of the invention as defined in the following claims.

Accordingly, the thought of the present invention must not be confined to the explained embodiments, and the following patent claims as well as everything including variation equal or equivalent to the patent claims pertain to the category of the thought of the present invention.

## Claims

1. A method for performing visual search based on a movement and/or an angular position of a terminal comprising the steps of:
(a) sensing a movement and/or an angular position of a terminal by using at least one of sensors;
(b) determining whether a triggering event occurs or not by referring to at least one of the sensed movement and the sensed angular position of the terminal; and
(c) if the triggering event occurs, allowing visual search to be performed for at least one of objects included in an output image displayed on the terminal at the time of the occurrence of the triggering event;
wherein the output image is generated in a form of augmented reality by combining an image inputted through the terminal in real time with information relevant thereto.

2. The method of claim 1, wherein the triggering event includes at least one of events: a first event of the terminal moving by a prefixed pattern, a second event of the terminal stopping moving for a predefined period of time, and a third event of the terminal taking a pre-established angular position.

3. The method of claim 2, wherein the prefixed pattern is specified by at least one of factors : the terminal' s moving distance, velocity, acceleration and moving direction.

4. The method of claim 2, wherein the pre-established angular position is specified by an angle at which the terminal is tilted to at least one of axes.

5. The method of claim 1, wherein, at the step (c), at least one of objects are top n objects displayed on the output image closer to the center thereof.

6. The method of claim 1, wherein, at the step (c), the visual search is performed by a remote operation equipment communicable with the terminal.

7. The method of claim 1, further comprising the step of: (d) providing information on at least one of the objects obtained as a result of performing the visual search.

8. The method of claim 1, wherein, at the step of (d), the image inputted by the terminal overlaid with the information on at least one of the objects is formed and provided in a form of augmented reality.

9. A terminal for performing visual search based on a movement and/or angular position thereof comprising:
a movement and/or angular position sensing part 110 for sensing information on a movement and/or angular position thereof by using at least one of sensors;
a triggering event identifying part for determining whether a triggering event occurs or not by referring to at least one of the sensed movement and the sensed angular position thereof; and
a visual search part for performing visual search for at least one of objects included in an output image displayed thereon if the triggering event occurs;
wherein the output image is generated in a form of augmented reality by combining an image inputted therethrough in real time with information relevant thereto.

10. The terminal of claim 9, wherein the triggering event includes at least one of events: a first event of moving by a prefixed pattern, a second one of stopping moving for a predefined period of time, and a third one of taking a pre-established angular position.

11. The terminal of claim 10, wherein the prefixed pattern is specified by at least one of factors: moving distance, velocity, acceleration and moving direction thereof.

12. The terminal of claim 10, wherein the pre-established angular position is specified by an angle at which it is tilted to at least one of axes.

13. The terminal of claim 9, wherein at least one of objects are top n objects displayed on the output image closer to the center thereof.

14. The terminal of claim 9, wherein the visual search is performed by remote operation equipment communicable therewith.

15. The terminal of claim 9, wherein an output image generating part for providing information on at least one of the objects obtained as a result of performing the visual search is further included.

16. The terminal of claim 15, wherein the output image generating part forms and provides the image inputted thereby overlaid with the information on at least one of object (s) in a form of augmented reality.

17. The method of claim 1, wherein, if a key is inputted at a first angular position of the terminal as a first triggering event, a retrieval of information around a location of the terminal is performed at the time of the occurrence of the first triggering event; and if another key is inputted at a second angular position of the terminal as a second triggering event, visual search for at least one of objects included on the output image displayed through the terminal is performed at the time of the occurrence of the second triggering event.

18. The method of claim 7, wherein the step (d) includes the steps of:
(d1) sensing the movement and/or the angular position of the terminal by using at least one of sensors;
(d2) determining whether a triggering event occurs or not by referring to at least one of the sensed movement of the terminal and the sensed angular position thereof; and
(d3) if the triggering event for controlling the output image occurs, changing at least one of a method of displaying information on objects and an information type.

19. The terminal of claim 9, wherein the triggering event identifying part determines the input of a key at its first angular position as a first triggering event and the input of another key at its second angular position as a second triggering event; and
wherein the visual search part performs a retrieval of information around the location of the terminal at the time of the occurrence of the first triggering event and then performs the visual search for at least one of objects included on the output image displayed through the terminal at the time of the occurrence of the second triggering event.

20. The terminal of claim 15, wherein the output image generating part senses its movement and/or angular position by using at least one of sensors, determines whether the triggering event occurs or not by referring to at least one of the sensed movement and the sensed angular position, and changes at least one of a method of displaying information on objects and an information type, if the triggering event for controlling the output image occurs.

21. A medium recording a computer readable program to execute the method of any one of claims 1 to 8, 17 and 18.
